# EUROPEAN PATENT APPLICATION

(11) **EP 4 836 260 A1**
(43) Date of publication of application: **04.11.2026**
(21) Application number: 24912880.2
(22) Date of filing: 25.12.2024
(51) Int. Cl.: H02K 15/0414

(54) **SEGMENT COIL MANAGEMENT METHOD AND DEVICE**

(30) Priority: 26.12.2023 JP 2023220093
(71) Applicant: NHK Spring Co., Ltd., Yokohama-shi, Kanagawa 236-0004 (JP)
(72) Inventor: UEDA Ryosuke, Yokohama-shi Kanagawa 236-0004 (JP); OKUBO Shuhei, Yokohama-shi Kanagawa 236-0004 (JP)
(74) Representative: Oppermann, Frank
(86) International application number: PCT/JP2024/045850
(87) International publication number: WO 2025/142994

(57) **Abstract**

Provided is a management method for segment coils, capable of managing a subsequent process for the segment coil according to information read from an information indication part. The management method holds a plurality of segment coils 7 each having an information indication part 11 and used for a stator 1 of a rotating electric machine, takes out a target segment coil 7 from the plurality of the held segment coils 7 for a subsequent process, reads information from the information indication part 11 when taking out the target segment coil 7, and manages the subsequent process according to the read information.

## Description

### FIELD OF THE INVENTION

The present invention relates to a segment coil management method and a segment coil management device for managing a plurality of segment coils used in a stator of a rotating electric machine.

### BACKGROUND OF THE INVENTION

As a conventional management method for segment coils, there is one described in Patent Literature 1. In this management method, identification information is provided to the segment coil in advance. After the identification information is read, three-dimensional measurement is performed for the segment coil subjected to press bending process. The measurement result and the identification information are associated with processing time by a management PC.

Then, it is determined whether quality of the segment coil satisfies a certain criterion based on the three-dimensional measurement result. If the quality of the segment coil does not satisfy the criterion, the segment coil is discarded and the identification information is recorded in the management PC.

In the conventional management method for segment coils, only the measurement result of the three-dimensional measurement and the fact that the segment coil is discarded which are the results of the respective processes are linked to the identification information.

### CITATION LIST

### PATENT LITERATURE

| | |
|---|---|
| PATENT LITERATURE 1: | JP2021-40457A |

### SUMMARY OF THE INVENTION

### PROBLEMS TO BE SOLVED BY THE INVENTION

The problem to be solved is that results of respective processes are simply linked to identification information of a segment coil.

### MEANS FOR SOLVING THE PROBLEM

The present invention provides a management method for segment coils, holding a plurality of segment coils each having an information indication part and used for a stator of a rotating electric machine, taking out a target segment coil from the plurality of the held segment coils for a subsequent process, reading information from the information indication part of the target segment coil when taking out the target segment coil, and managing the subsequent process according to the read information.

The present invention also provides a management device for segment coils including a holding unit configured to hold a plurality of segment coils each having an information indication part and being used for a stator of a rotating electric machine, a taking-out unit configured to take out a target segment coil from the plurality of the held segment coils for a subsequent process, a reading unit configured to read information from the information indication part of the target segment coil when taking out the target segment coil, and a management unit that manages the subsequent process according to the read information.

### EFFECT OF THE INVENTION

The present invention manages a subsequent process for a segment coil according to information read from an information indication part of the segment coil.

### BRIEF DESCRIPTION OF THE DRAWINGS

[FIG. 1] FIG. 1 is a perspective view of a stator of a rotating electric machine according to an embodiment 1 of the present invention.
[FIG. 2] FIG. 2 is an exploded perspective view of the stator of FIG. 1.
[FIG. 3] FIG. 3 is a perspective view of a segment coil used for the stator of FIG. 1.
[FIG. 4] FIG. 4 is an enlarged plan view illustrating a coil end of the segment coil of FIG. 3.
[FIG. 5] FIG. 5 is a schematic view illustrating a management device for segment coils according to the embodiment 1 of the present invention.
[FIG. 6] FIGS. 6 (A) and 6 (B) are schematic views partially illustrating a management device for segment coils according to modifications of the embodiment 1.
[FIG. 7] FIG. 7 is a schematic view partially illustrating a management device for segment coils according to an embodiment 2 of the present invention.
[FIG. 8] FIG. 8 is a schematic front view illustrating an unloader of the management device of FIG. 7.
[FIG. 9] FIG. 9 is a schematic view illustrating a management device for segment coils according to an embodiment 3 of the present invention.
[FIG. 10] FIG. 10 is a schematic side view illustrating a lifter of the management device of FIG. 9.
[FIG. 11] FIG. 11 is a schematic plan view illustrating a management device for segment coils according to an embodiment 4 of the present invention.
[FIG. 12] FIG. 12 is a schematic plan view illustrating a management device for segment coils according to a modification of the embodiment 4.

### EMBODIMENT FOR CARRYING OUT THE INVENTION

A management method for segment coils according to one embodiment reads information from an information indication part 11 provided on each of a plurality of segment coils 7 used for a stator 1 of a rotating electric machine, to manage a subsequent process. This management method holds the plurality of the segment coils 7 and takes out a target segment coil from the plurality of the held segment coils 7 for the subsequent process. When the target segment coil 7 is taken out, the information is read from the information indication part 11 of the target segment coil 7, and the subsequent process is managed according to the read information.

The taking-out of the target segment coil 7 may be performed by moving the target segment coil 7 to a predetermined position for the subsequent step relative to the other segment coils 7, and the reading of the information may be performed during the moving.

The reading of the information may be performed in various directions. As one embodiment, it may be performed from a front or a back in a moving direction of the target segment coil 7. As another embodiment, the reading of information may be performed from a right and left direction relative to the moving direction of the segment coil 7.

As still another embodiment, the information may be read while the plurality of the segment coils 7 are held. In this case, the plurality of the segment coils 7 are maintained in a predetermined posture by the holding. The reading of the information is performed in a holding state of the plurality of the segment coils 7.

The management device 13 for segment coils according to one embodiment reads the information from the information indication part 11 provided on each of the plurality of the segment coils 7 used for the stator 1 of the rotating electric machine to manage the subsequent process. The management device 13 includes a holding unit 15, a taking-out unit 17, a reading unit 19, and a management unit 21.

The holding unit 15 holds the plurality of segment coils 7. The taking-out unit 17 takes out the target segment coil 7 for the subsequent process from the plurality of the held segment coils 7. The reading unit 19 reads the information from the information indication part 11 of the target segment coil 7 when taking out the target segment coil 7. The management unit 21 manages the subsequent process according to the read information.

The taking-out unit 17 may move the target segment coil 7 to the predetermined position for the subsequent process relative to the other segment coils 7, and the reading unit 19 may perform the reading of the information during the moving. The taking-out unit 17 may include the reading unit 19, to read the information using the reading unit 19 during the moving.

The reading unit 19 according to one embodiment reads the information from the front or the back in the moving direction of the target segment coil 7.

As another embodiment, the holding portion 15 may maintain the plurality of the segment coils 7 in the predetermined posture by the holding, and the reading portion 19 may perform the reading of the information in the holding state of the plurality of the segment coils 7.

The subsequent process may be various processes. In one embodiment, the subsequent process may be an alignment step of annularly aligning the plurality of the segment coils 7.

### EMBODIMENT 1

### [Stator]

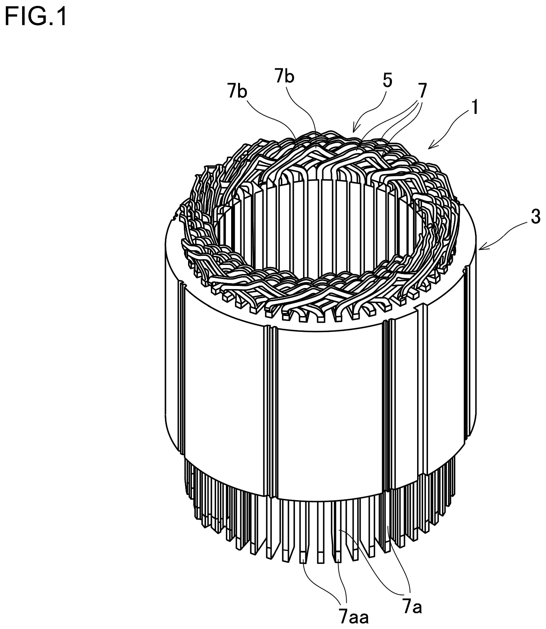

A management device and a management method for segment coils of the present embodiment are used in a manufacturing process of a stator of a rotating electric machine. An example of the stator will be explained with reference to FIGS. 1 to 4.

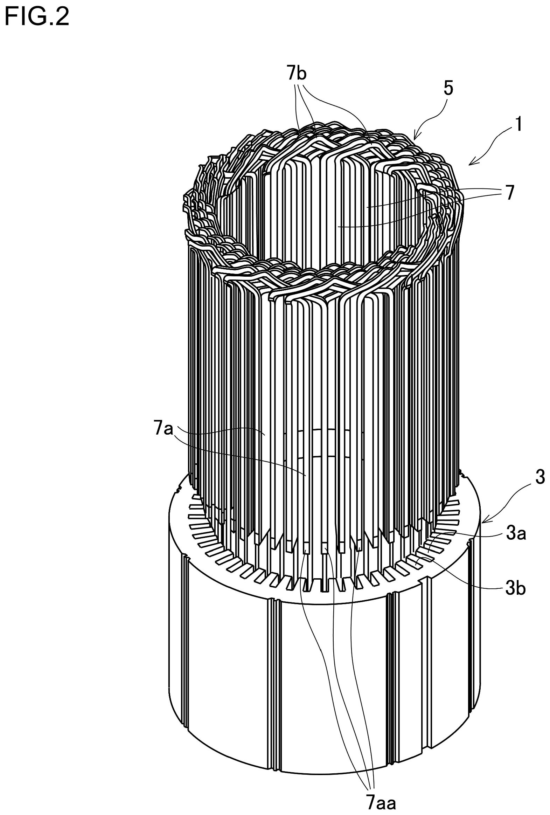

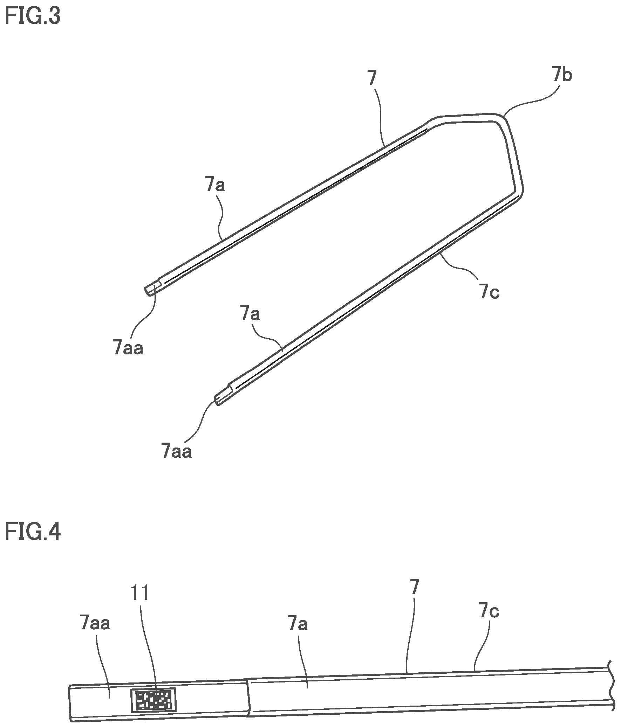

FIG. 1 is a perspective view of a stator of a rotating electric machine. FIG. 2 is an exploded perspective view of the stator of FIG. 1. FIG. 3 is a perspective view of a segment coil used for the stator of FIG. 1. FIG. 4 is an enlarged plan view illustrating a coil end of the segment coil of FIG. 3.

A stator 1 of FIG. 1 forms a rotating electric machine together with a rotor (not illustrated). The rotating electric machine is configured as, for example, a 3-phase (U-phase, V-phase, and W-phase) AC permanent magnet synchronous motor with 8 poles.

Here, FIG. 1 illustrates a state in which a stator coil 5 is incorporated into a stator core 3 like FIG. 2. In the state of FIG. 1, leg portions 7a including coil ends 7aa of the stator coil 5 are projected from the stator core 3. Although not illustrated, diametral expansion and twist processing are performed on the projected portions.

Thereafter, the coil ends 7aa are welded to other radially adjacent coil ends 7aa and are subjected to insulating coating. Then, resin encapsulation or the like is conducted to a portion of the stator coil 5 to obtain the stator 1 of the rotating electric machine. In the following explanation, one illustrated in o FIG. 1 is regarded as the stator 1 for the explanation as a matter of convenience.

The stator 1 includes the stator core 3 and the stator coil 5. The stator core 3 is formed by stacking, for example, a plurality of annular electromagnetic steel sheets. The stator coil 5 is configured into a wave-winding shape so as to be a plurality of layers in a radial direction with respect to the stator core 3. The stator coil 5 is composed of a plurality of segment coils 7.

The stator core 3 is provided alternately with a plurality of teeth 3a and a plurality of slots 3b at equal intervals in a circumferential direction (rotational direction of the rotating electric machine). The segment coils 7 are inserted into the respective slots 3b.

In the respective segment coils 7 inserted into the respective slots 3b of the stator core 3, the leg portions 7a including the coil ends 7aa are projected from an end portion of the stator core 3 as explained above.

As illustrated in FIG. 1 and FIG. 3, each segment coil 7 is formed by bending a rectangular flat wire having a rectangular cross section into a U shape, for example, a hairpin shape. The plurality of the segment coils 7 are aligned along the circumferential direction with respect to the stator core 3, and each segment coil 7 is shifted to an adjacent layer at a vertex portion 7b.

The segment coil 7 is covered with an insulating layer 7c. The insulating layer 7c is a layer that ensures an insulating property of the segment coil 7, and is formed of a coating film in the present embodiment. The insulating layer 7c is formed on the segment coil 7 except for the coil ends 7aa. The coil ends 7aa, therefore, have no insulating layer 7c.

The coil end 7aa of the present embodiment has a flat surface on a front. As illustrated in FIGS. 3 and 4, the flat surface is provided with a code 11 (FIG. 4) as an information indication part. It should be noted that the cord 11 may be provided on another portion of the segment coil 7. In addition, the cord 11 may be provided at a plurality of positions of the segment coil 7. For example, the cord may be provided on two or more of the front and back and left and right positions of the coil ends 7aa of the segment coil 7. If the cords 11 are provided at a plurality of locations, orientation of the segment coil 7 may be determined.

Although the code 11 of the present embodiment is a two-dimensional code in the present embodiment, it may be, for example, a one-dimensional code or the like. The information indication part may be a character, a symbol, or the like recognizable using image processing or the like other than the code 11.

The cord 11 may be formed by engraving, printing, sticking or the like. The cord 11 of the present embodiment is an engraving formed by a laser marker.

Information recorded in the code 11 includes attribute information specifying any or any combination or all of a facility, a material, a manufacturing condition, a manufacturing date and time for manufacturing the segment coil 7, and shape and weight of the segment coil 7 manufactured. In addition, other information may also be included in the code 11. The other information may be, for example, producer information indicating a producer of the material or the like. The other information may be other than the information related to the manufacturing.

The cord 11 may be partly or wholly disappeared after the welding of the coil end 7aa. As a result, it is possible to suppress information leakage of the code 11. The disappearance of the code 11 means a degree to which the reading is unable to be performed. The cord 11, therefore, may be disappeared by insulating coating or the like of the coil end 7aa.

### [Management device]

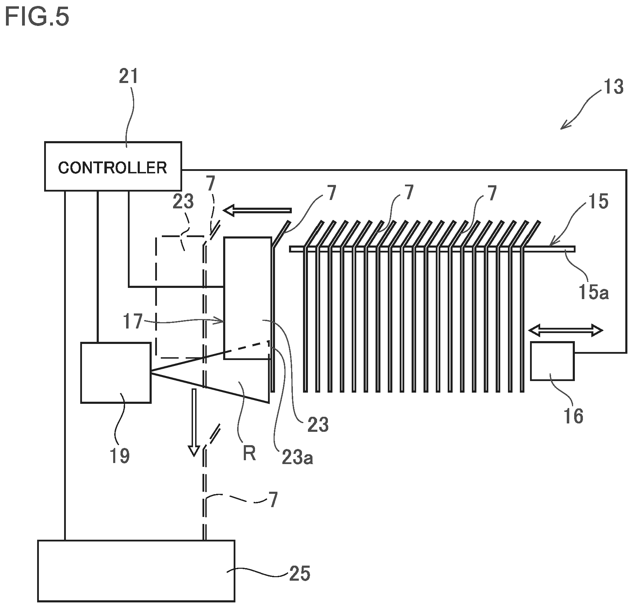

FIG. 5 is a schematic view illustrating a management device 13 for the segment coils 7 according to the embodiment 1 of the present invention.

The management device 13 reads the information from the code 11 provided on each of the plurality of the segment coils 7 installed into the stator 1 of the rotating electric machine, to manage the subsequent process of the segment coils 7. The management device 13 of the present embodiment is provided with a holder 15 as a holding unit, a pusher 16, an unloader 17 as a taking-out unit, a reader 19 as a reading unit, and a controller 21 as a management unit.

The holder 15 holds the plurality of the segment coils 7. Regardless of the form of the holding, the holder 15 collectively holds the plurality of the segment coils 7. The holder 15 of the present embodiment has a bar 15a on which the plurality of the segment coils 7 are hung to be straddled.

The plurality of the segment coils 7 are arranged in a row so as to be slidable along the bar 15a on the holder 15. The holder 15 is disposed at an appropriate position using a base or the like with respect to the unloader 17.

The pusher 16 presses the plurality of the segment coils 7 on the holder 15 toward the unloader 17. The pusher 16 of the present embodiment is a block movable along the bar 15a of the holder 15. The movement of the pusher 16 may be performed by an appropriate actuator such as a cylinder device.

The unloader 17 takes out the target segment coil 7 for the subsequent process from the plurality of the segment coils 7 held by the holder 15. The target segment coil 7 refers to a segment coil 7 being a target to be taken out.

The taking-out of the target segment coil 7 is performed by moving the target segment coil 7 to a predetermined position for an alignment step which is the subsequent process. In addition, the alignment step is a step of annularly aligning the plurality of the segment coils 7.

The unloader 17 has an adsorption, shooter, robot arm, or the like regardless of the form of the taking-out. The unloader 17 of the present embodiment takes out the target segment coil 7 by adsorption, and includes a adsorption unit 23.

The adsorption unit 23 is composed of, for example, a adsorption block, and adsorbs the segment coil 7 on an adsorption surface 23a by adsorption of air. In addition, the adsorption unit 23 may be a sheet or the like using an electrorheological gel. The adsorption unit 23 is supported by a machine frame which is not illustrated and is configured to be movable between a taking-out position and a releasing position.

The movement of the adsorption unit 23 may be performed by an appropriate actuator such as a cylinder device. In the present embodiment, a moving direction of the adsorption unit 23 is a row direction of the plurality of the segment coils 7 on the holder 15.

The taking-out position is a position making the target segment coil 7 be taken out as indicated by a solid line in FIG. 5. The taking-out position of the present embodiment is a position adjacent to an end portion of the holder 15, and is a position in contact with the target segment coil 7 located forward in a pressing direction in the plurality of the segment coils 7 pressed by the pusher 16.

The releasing position is a position at which the taken-out segment coil is released as indicated by a two-dot chain line in FIG. 5, and is the predetermined position for the alignment step. In the present embodiment, in the releasing position, the segment coil 7 is dropped downward from the adsorption unit 23.

The dropped segment coil 7 is held by an alignment jig 25 for annularly aligning. It should be noted that the dropped segment coil 7 may be arranged on the stator core 3 instead of the alignment jig 25.

The reader 19 reads the information from the code 11 when taking out the target segment coil 7. The reader 19 may employ one according to a type of the cord 11, and may be a dedicated reader, a camera, or the like.

The reader 19 of the present embodiment is composed of a reader of a code 11 which is a two-dimensional code, to optically read the information in a reading region R. In the present embodiment, the reading of the information is performed from the front of the target segment coil 7 in the moving direction during the moving of the target segment coil 7 to the releasing position for the alignment step. In the reader 19, the reading region R is, therefore, positioned in a moving path of the target segment coil 7.

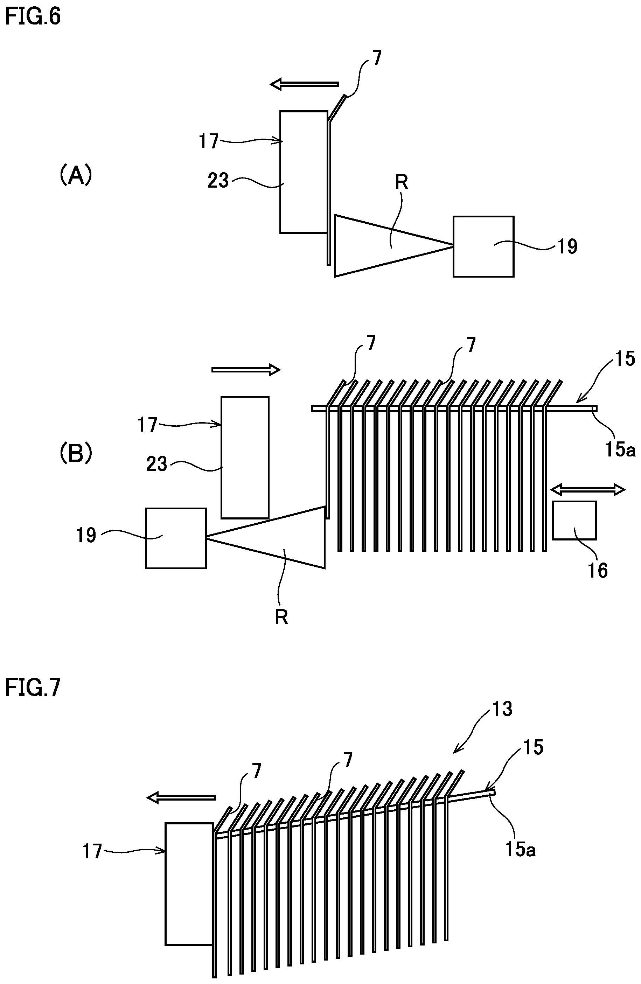

It should be noted that the reading of the information may be performed from the back of the target segment coil 7 in the moving direction as illustrated in FIG. 6(A). In this case, the position of the cord 11 is reversed front and back in the moving direction with respect to the segment coil 7, or the cord 11 is also indicated on the back. In addition, a reading direction of the information is not limited to the front-back direction in the moving direction, and may be a right and left direction with respect to the moving direction. In any case, the code 11 is attached to a position according to the reading direction.

Further, as illustrated in FIG. 6(B), the reading of the information may be performed in a holding state of the plurality of the segment coils 7 on the holder 15. For example, the reading region R is positioned so as to reach the target segment coil 7 (the head of the segment coils 7 held in a row) held by the holder 15. With this, the information may be read from the target segment coil 7 before this target segment coil 7 is taken out after the immediately preceding segment coil 7 is taken out.

The modifications of FIGS. 6(A) and 6(B) are effective for the segment coils 7 in which the leg portions 7a of the segment coils 7 are relatively short. This is because, in the segment coil 7 having the relatively short leg portions 7a, the coil ends 7aa are not projected from the adsorption portion 23 in a state that the segment coil 7 is adsorbed to the adsorption portion 23 and the cord 11 may not be read from the front in the moving direction.

The controller 21 in FIG. 5 is a controller that manages the alignment step, which is the subsequent process, according to the read information, and may be configured by a computer having a processor and a memory. The management of the alignment step will be explained later as a management method. The controller 21 of the present embodiment also controls each unit of the management device 13. The control of each unit, however, may be performed by a controller or the like being different from the controller 21.

### [Management method]

As illustrated in FIG. 5, the management method of the present embodiment reads the information from the code 11 provided on each of the plurality of the segment coils 7 used for the stator 1 of the rotating electric machine, to manage the subsequent process of the segment coils 11.

Namely, the management method holds the plurality of the segment coils 7 on the holder 15, first. In particular, the plurality of the segment coils 7 are formed in a hairpin shape by pressing or the like of wires, and are sequentially hung on the holder 15. With this, the plurality of the segment coils 7 are held in the predetermined posture in a row on the holder 15.

Next, the target segment coil 7 is taken out from the plurality of the segment coils 7 held on the holder 15 for the subsequent process by the unloader 17. In particular, the adsorption unit 23 of the unloader 17 is moved to the taking-out position, and the plurality of the segment coils 7 held in a row are pressed by the pusher 16 toward the adsorption unit 23.

Accordingly, the target segment coil 7 located at the head contacts the adsorption unit 23. The adsorption unit 23 adsorbs the segment coil 7 with which the adsorption unit is brought into contact. The adsorption portion 23 to which the target segment coil 7 is adsorbed moves to the releasing position as indicated by the two-dot chain line in FIG. 5. The target segment coil 7, therefore, moves to the predetermined position (releasing position) for the subsequent process with respect to the other segment coils 7. Thus, the target segment coil 7 is taken out.

When the target segment coil 7 is taken out as explained above, the information is read from the code 11 of the target segment coil 7 by the reader 19. In the present embodiment, the reader 19 located in front of the target segment coil 7 in the moving direction reads the information from the code 11 of the target segment coil 7.

Since the reading of the information is, therefore, performed during the moving of the target segment coil 7, it is possible to improve work efficiency. The reading of the information during the moving of the target segment coil 7 is surely performed from the front of the target segment coil 7 in the moving direction. In addition, the target segment coil 7 is maintained in the moving posture by being adsorbed by the adsorption unit 23, the information is surely read in this point of view.

In this way, the alignment step is managed according to the read information as the subsequent process for the target segment coil 7 from which the information is read and which is moved to the releasing position.

In the management of the alignment step, for example, the controller 21 controls rotation of the alignment jig 25 and release of the segment coil 7. In the alignment step, the alignment jig 25 is rotated and the segment coil 7 is dropped from the adsorption portion 23 at the releasing position, to arrange the segment coil in the alignment jig 25. Repeating this, the plurality of the segment coils 7 are annularly aligned on the alignment jig 25.

The dropping of the segment coil 7 may be performed by releasing the adsorption or moving the segment coil 7 downward using a pusher which is not illustrated. This control may also be performed by the controller 21.

In this alignment step, there is a case that the segment coils 7 having different lengths of the leg portions 7a are mixed on the holder 15. In this case, the segment coils are arranged on a predetermined alignment jig 25 or on predetermined positions in the alignment jig 25 according to lengths of the leg portions 7a obtained from the information read from the code 11.

For example, segment coils 7 having relatively long leg portions 7a are directly annularly aligned on the alignment jig 25, and segment coils 7 having relatively short leg portions 7a are aligned at predetermined positions on the same alignment jig 25. Alternatively, the segment coils 7 having relatively long leg portions 7a are aligned with one alignment jig 25, and the segment coils 7 having relatively short leg portions 7a are aligned on another alignment jig 25.

As explained above, in the management device 13 and the management method according to the present embodiment, even if different types of the segment coils 7 are mixed on the holder 15, it is possible to manage the alignment step that is the subsequent process.

It should be noted that the subsequent process may be another process other than the alignment step, and may be a direct insertion step, a serving step, an additional machining step, an inspection step, a management or the like. It is, therefore, also possible to selectively perform various types of steps as the subsequent process according to the segment coil 7.

In the direct insertion step, the segment coil 7 is directly inserted into the stator core without using the alignment jig 25. In this case, the stator core may be disposed in place of the alignment jig 25, and the segment coil 7 may be aligned with respect to the stator core similarly to the alignment with respect to the alignment jig 25.

In the serving step, the segment coils 7 are aligned in a predetermined posture in the holder 15 or the like before the segment coils 7 are supplied to the alignment step or the direct insertion step. In the additional processing step, additional processing is performed on the segment coil 7 having a predetermined shape as necessary.

In the case of the inspection step, the target segment coil 7 may be held by an inspection jig which is not illustrated instead of the alignment jig 25. In addition, in the case of the inspection step, it may compare a shape of the information read from the segment coil 7 with a shape of an actual inspection result to determine quality or the like of the segment coil 7.

Further, in the management of the segment coil 7, the code 11 is read to determine whether or not the subsequent process for the segment coil 7 from which the code 11 is read is correct, and the segment coil 7 from which the code 11 is read is taken out if it is wrong. Further, as the management of the segment coil 7, the segment coil 7 may be stratified (larger, normal, smaller, or the like) according to the dimension measured in the inspection step.

### EMBODIMENT 2

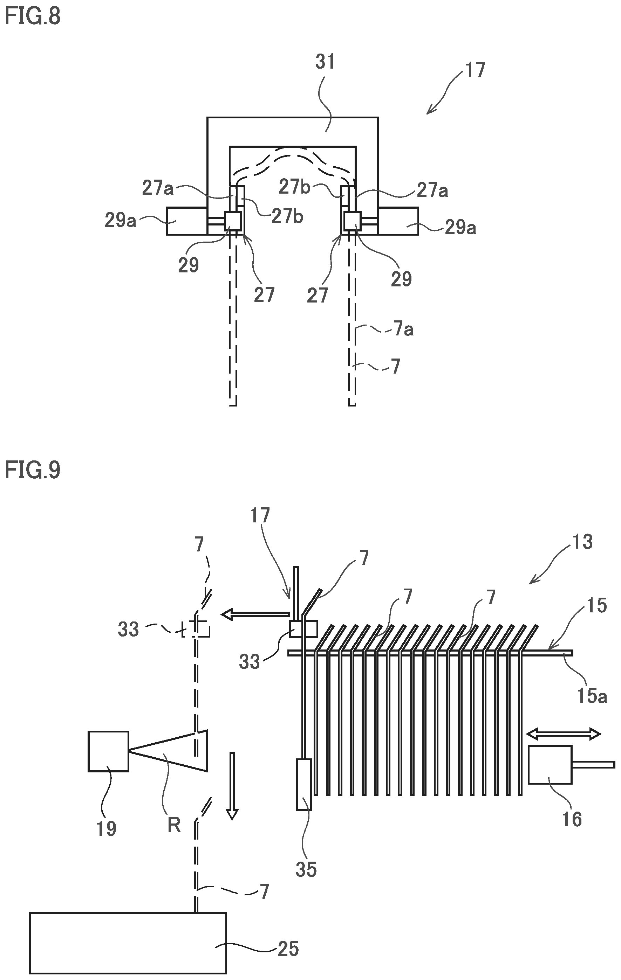

FIG. 7 is a schematic view partially illustrating a management device for segment coils according to the embodiment 2 of the present invention. FIG. 8 is a schematic front view illustrating an unloader of FIG. 7. In addition, the second embodiment is in common with the embodiment 1 in the basic structure, and components corresponding to those in the embodiment 1 are represented with the same reference numerals as the embodiment 1, to omit redundant description.

As illustrated in FIGS. 7 and 8, a management device 13 according to the embodiment 2 is one in which a structure of a holder 15 and an unloader 17 is changed relative to the embodiment 1.

The holder 15 is configured as a shooter and is obliquely disposed so that one end of a bar 15a in a longitudinal direction is positioned downward and the other end thereof is positioned upward. The holder 15 slides the segment coils 7 disposed so as to straddle the bar 15a along the bar 15a to supply the segment coils to the unloader 17 located on one end side of the bar 15a.

In addition, the holder 15 may be provided with a movable stopper at one end of the bar 15a. In this case, the sliding of the plurality of the segment coils 7 is stopped by the stopper, and the stopper is released when the target segment coil 7 is taken out. Providing a plurality of stoppers, the target segment coil 7 may be slid to the taking-out position and the sliding of the other segment coils 7 connected thereto may be stopped.

Further, the holder 15 may be configured to operate in an inclined state in which one end is positioned downward and a non-inclined state in which the other end is positioned at the same level or below the one end.

The unloader 17 receives and holds the target segment coil 7 moved by the sliding from the holder 15 to the taking-out position. In particular, the unloader 17 includes a receiving portion 27 and a retainer 29.

The receiving portion 27 is formed in a plate shape or a block shape, and has a groove 27a into which the leg portion 7a of the target segment coil 7 is inserted at the taking-out position. Additionally, the receiving portion 27 includes a receiving wall portion 27b that receives a base portion of the leg portion 7a in a vertical direction in a state that the leg portion 7a is inserted into the groove 27a.

The receiving portion 27 is provided in a pair corresponding to the leg portions 7a. The receiving portions 27 of the present embodiment are integrally formed through a frame 31. The frame 31 moves between the taking-out position and the releasing position by an actuator.

The retainer 29 is provided in each of the receiving portions 27, to hold, in the groove 27a, the leg portion 7a of the segment coil 7 inserted into the groove 27a. In addition, the retainer 29 may be provided in only one receiving portion 27.

The retainer 29 is, for example, a block made of a resin or the like, and is configured to be movable between a holding position located on the groove 27a and a non-holding position retracted from the groove 27a. The movement of the retainer 29 may be performed by an actuator 29a such as an air cylinder attached to the frame 31. In addition, the retainer 29 may press the leg portion 7a against the receiving wall portion 27b.

The reader 19 should perform at the time of moving or holding the target segment coil 7 similarly to the embodiment 1. Other configurations are the same as those in the embodiment 1.

The second embodiment provides the same effects as those of the embodiment 1.

### EMBODIMENT 3

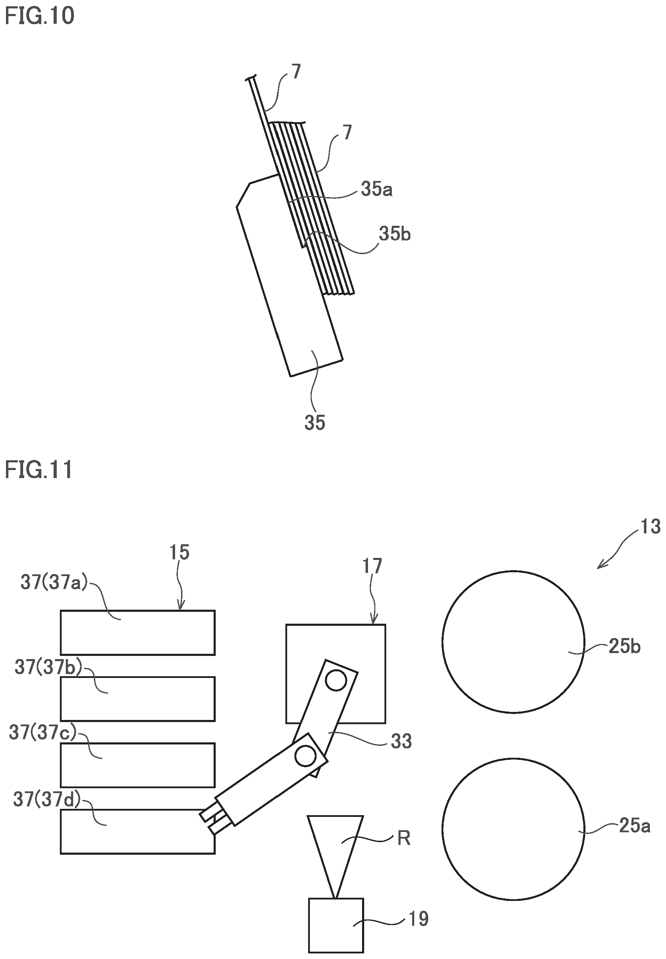

FIG. 9 is a schematic view illustrating a management device for segment coils according to the embodiment 3 of the present invention. FIG. 10 is a schematic side view illustrating a lifter of the management device of FIG. 9. In addition, the embodiment 3 is in common with the embodiment 1 in the basic structure, and components corresponding to those in the embodiment 1 are represented with the same reference numerals as those in the embodiment 1, to omit redundant description.

In a management device 13 of the embodiment 3, an unloader 17 is provided with a robot hand 33 instead of the adsorption unit 23. Accordingly, a configuration of a holder 15 is changed relative to the embodiment 1.

A well-known robot hand may be adopted as long as the robot hand 33 holds the target segment coil 7.

The holder 15 holds the plurality of the segment coils 7 and allows the robot hand 33 to take out the target segment coil 7 located at one end (tip). The holder 15 of the present embodiment has a lifter 35 as a pushing-up portion.

The lifter 35 pushes up the target segment coil 7 located at one end (tip) in the row direction of the plurality of the segment coils 7. The lifter 35 of the present embodiment includes a plate-like body and has a recess 35a into which the leg portion 7a of the target segment coil 7 enters. The lifter 35 moves upward, so that a contact surface 35b of the recess 35a pushes up an end edge of the leg portion 7a of the target segment coil 7 from below. The movement of the lifter 35 should be performed by an appropriate actuator. A moving direction of the lifter 35 of the present embodiment is an inclination direction gradually moving forward in the pressing direction according to upward movement.

The pushed-up target segment coil 7 is held by the robot hand 33 and moved to the releasing position. During this moving, the reader 19 reads the information from the code 11 of the segment coil 7. Then, the robot hand 33 aligns and releases the target segment coil 7 on the alignment jig 25 according to the read information.

In the embodiment 3 having this configuration, the robot hand 33 easily and surely takes out the target segment coil 7. In addition, the embodiment 3 provides the same effects as those of the embodiment 1.

### EMBODIMENT 4

FIG. 11 is a schematic plan view illustrating a management device for segment coils according to the embodiment 4 of the present invention. In addition, the embodiment 4 is in common with the embodiment 1 in the basic configuration, and components corresponding to those in the embodiment 1 are represented with the same reference numerals as those of the embodiment 1, to omit redundant description.

In a management device 13 of the embodiment 4, a holder 15 has a plurality of cassettes 37(37a, 37b, 37c, 37d). Each cassette 37 holds a plurality of segment coils 7 (not illustrated) similarly to the holder 15 of the embodiment 1. The plurality of the cassettes 37 hold, for example, different types of the segment coils 7, respectively. In addition, the number of the cassettes 37 is arbitrary.

The unloader 17 is provided with the robot hand 33 similarly to the embodiment 3. Further, the present embodiment is provided with a plurality of alignment jigs 25a and 25b. The reader 19 is disposed so that the reading region R is located in a moving path of the segment coil 7 between the alignment jigs 25a and 25b and the cassette 37.

With this configuration, while the robot hand 33 moves the target segment coil 7 taken out from the cassette 37 to the alignment jigs 25a and 25b, the information is read by the reader 19 from the code 11 of the target segment coil 7. According to the read information, the target segment coil 7 is aligned and released to a predetermined position of the alignment jig 25a or 25b.

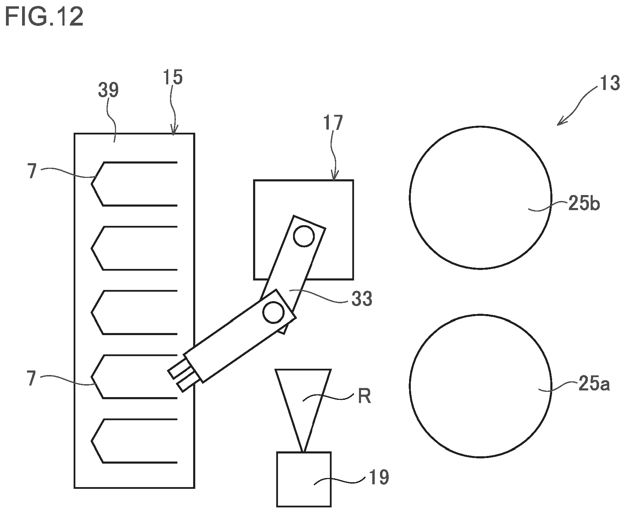

FIG. 12 is a schematic plan view illustrating a management device for segment coils according to a modification of the embodiment 4.

In the modification of FIG. 12, a conveyor 39 is adopted instead of the cassettes 37. Although the conveyor 39 is of a belt type, it may be another conveyor such as a roller type. In this modification, the target segment coil 7 is taken out from the plurality of the segment coils 7 conveyed on the conveyor 39. Thereafter, as in the embodiment 4, the information is read from the code 11 of the target segment coil 7, and the target segment coil 7 is aligned and released to the predetermined position of the alignment jigs 25a or 25b according to the read information.

The embodiment 4 and the modification provide the same effects as those of the embodiment 1.

### DESCRIPTION OF NUMERALS

- 1: Stator
- 7: Segment Coil
- 11: Code (Information Indication Part)
- 13: Management Device
- 15: Holder (Holding Unit)
- 17: Unloader (Take-out Unit)
- 19: Reader (Reading Unit)
- 21: Controller (Management Unit)

## Claims

1. A management method for segment coils comprising:
holding a plurality of segment coils each having an information indication part and used for a stator of a rotating electric machine;
taking out a target segment coil from the plurality of the held segment coils for a subsequent process;
reading information from the information indication part of the target segment coil when taking out the target segment coil; and
managing the subsequent process according to the read information.

2. The management method for segment coils according to claim 1, wherein
the taking-out of the target segment coil is performed by moving the target segment coil to a predetermined position for the subsequent process relative to other segment coils, and
the reading of the information is performed during the moving.

3. The management method for segment coils according to claim 2, wherein
the reading of the information is performed from a front or a back in a moving direction of the target segment coil.

4. The management method for segment coils according to claim 1, wherein
the plurality of the segment coils are maintained in a predetermined posture by the holding, and
the reading of the information is performed in a holding state of the plurality of the segment coils.

5. A management method for segment coils according to any one of claims 1 to 4, wherein
the subsequent process is an alignment step of annularly aligning the plurality of the segment coils.

6. A management device for segment coils comprising:
a holding unit configured to hold a plurality of segment coils each having an information indication part and being used for a stator of a rotating electric machine;
a taking-out unit configured to take out a target segment coil from the plurality of the held segment coils for a subsequent process;
a reading unit configured to read information from the information indication part of the target segment coil when taking out the target segment coil; and
a management unit that manages the subsequent process according to the read information.

7. The management device for segment coils according to claim 6, wherein
the taking-out unit moves the target segment coil to a predetermined position for the subsequent process relative to other segment coils, and
the reading unit performs the reading of the information during the moving.

8. The management device for segment coils according to claim 7, wherein
the reading unit reads the information from a front or a back in a moving direction of the target segment coil.

9. The management device for segment coils according to claim 6, wherein
the holding unit is configured to maintain the plurality of the segment coils in a predetermined posture by holding the plurality of segment coils, and
the reading unit reads the information in a holding state of the plurality of segment coils.

10. The management device for segment coils according to any one of claims 6 to 9, wherein
the subsequent process is an alignment step of annularly aligning the plurality of the segment coils.
